# EUROPÄISCHE PATENTSCHRIFT

(11) **EP 0 922 140 B1**
(45) Veröffentlichungstag und Bekanntmachung des Hinweises auf die Patenterteilung: **17.11.2004**
(21) Anmeldenummer: 98937517.5
(22) Anmeldetag: 19.06.1998
(51) Int. Cl.: D21G 9/00, G01N 33/34

(54) **STEUERUNGS- UND/ODER REGELUNGSSYSTEM EINER MASCHINE ZUR HERSTELLUNG EINER FASERSTOFFBAHN**
CONTROL AND/OR REGULATING SYSTEM FOR A MACHINE USED FOR PRODUCING A FIBER WEB
SYSTEME DE COMMANDE ET/OU DE REGULATION D'UNE MACHINE POUR LA FABRICATION D'UNE BANDE FIBREUSE

(30) Priorität: 27.06.1997 DE 19727460
(43) Veröffentlichungstag der Anmeldung: 16.06.1999
(73) Patentinhaber: Voith Paper Patent GmbH, 89522 Heidenheim (DE)
(72) Erfinder: GRIECH, Wolfgang, D-89522 Heidenheim (DE)
(86) Internationale Anmeldenummer: PCT/EP1998/003760
(87) Internationale Veröffentlichungsnummer: WO 1999/000547

(56) Entgegenhaltungen:
- EP-A- 0 401 188
- WO-A-97/23839

## Beschreibung

Die Erfindung betrifft ein Steuerungs- und/oder Regelungssystem einer Maschine zur Herstellung einer Faserstoffbahn wie insbesondere einer Papier- und/oder Kartonbahn, mit mehreren jeweils wenigstens einem Stellglied zugeordneten intelligenten Aktuatoren zur Beeinflussung bestimmter Eigenschaften der herzustellenden Faserstoffbahn.

Ein derartiges Steuerungs- und/oder Regelungssystem ist beispielsweise aus der EP-A-0 401 188 bekannt. Das bekannte System besitzt eine herkömmliche Busstruktur mit einem Master und einer Vielzahl von Slaves für die Kommunikation zwischen einer übergeordneten Steuereinheit und den Aktuatoren für ein Querprofilstellglied. Charakteristisch für eine solche, in vielen Bereichen der industriellen Steuerung seit längerem übliche Busstruktur ist, daß gleichzeitig alle Bus-Teilnehmer die Befehle des Masters empfangen, normalerweise jedoch nur der die richtige Adresse aufweisende angesprochene Slave den entsprechenden Befehl ausführt und anschließend dem Master antwortet.

Dies bringt u.a. den Nachteil mit sich, daß mit Ausnahme einer allgemeinen Adressierung (Broadcast), bei der sämtliche Slaves angesprochen werden, zu einer bestimmten Zeit jeweils nur eine Aktion durchgeführt werden kann. Mit einer solchen Busstruktur ist auch die Verwendung mehrerer Master von vornherein ausgeschlossen so daß beispielsweise auch keine Möglichkeit besteht, nach dem Redundanzprinzip mehrere Steuereinheiten einzusetzen. Ein aktives Redundanzkonzept beispielsweise mit automatischer Umschaltung im Falle eines Ausfalls ist praktisch nicht realisierbar. Zudem muß der Master stets auch die relevanten Status- und Alarmmeldungen abrufen, was insgesamt sehr zeitintensiv ist. Die Anzahl der Busteilnehmer ist üblicherweise durch Bustreiber begrenzt. Eine eventuell ins Auge gefaßte Realisierung mit einer an sich erwünschten Fiberoptik-Hardware wäre mit großen Schwierigkeiten und erheblichem Aufwand verbunden. Von Nachteil ist auch, daß für die einzelnen Teilnehmer eine Hardware-Adreßcodierung erforderlich ist.

Das aus der EP-A-0 401 188 bekannte System umfasst einen den Aktuatoren gemeinsamen seriellen Bus, über den die Aktuatoren und ein Steuersysten kammartig miteinander verkettet sind. Ein vergleichbares System ist überdies aus der älteren, nachveröffentlichten WO 97/23839 bekannt. Bei diesem System sind die Aktuatoren über einen Koppler mit einem übergeordneten Host-Control-System verbunden.

Ziel der Erfindung ist es, ein verbessertes Steuerungs- und/oder Regelungssystem der eingangs genannten Art zu schaffen, bei der die zuvor genannten Nachteile beseitigt sind und die bei deutlich höherem Datendurchsatz optimal an die unterschiedlichsten Betriebsbedingungen anpaßbar ist.

Diese Aufgabe wird nach der Erfindung dadurch gelöst, dass die Aktuatoren intelligente, mit eigenen Prozessoren versehene Teilnehmer einer dezentralen Kommunikations-/Hardware-Struktur ohne Master bilden, in der sie über einen geschlossenen Pipelinering miteinander gekoppelt sind, in dem jeder Teilnehmer stets nur mit den jeweils unmittelbar benachbarten Teilnehmern verbunden ist und die Datenpakete von jedem Teilnehmer zu jedem beliebigen Zeitpunkt ausgesendet werden können, und/oder über ein lokales LAN-Netz (LAN = Local area network) miteinander gekoppelt sind, das einen Peer-To-Peer-Aufbau besitzt, bei dem alle Teilnehmer gleichberechtigt sind.

Das erfindungsgemäße Steuerungs- und/oder Regelungssystem ist allgemein zur Anwendung im Papierindustriebereich geeignet. Aufgrund der Verwendung beispielsweise eines geschlossenen Piplineringes ist jeder Teilnehmer stets nur mit den jeweils unmittelbar benachbarten Teilnehmern verbunden. In diesem geschlossenen Pipelinering ist der letzte Teilnehmer wieder mit dem ersten Teilnehmer verbunden. Ein wesentlicher Vorteil der erfindungsgemäßen Ausbildung ist, daß die bisherige Unterscheidung in Master und Slaves entfallen kann. Zudem können in der erfindungsgemäßen dezentralen Kommunikations-/Hardware-Struktur zu einem gegebenen Zeitpunkt auch mehrere Datenpakete ausgetauscht werden. Die maximale Anzahl von Datehpaketen, die gleichzeitig auf dem Ring übertragen werden kann, entspricht bei einem unidirektionalen Pipelinering der Anzahl der Teilnehmer, und bei einem bidirektionalen Ring der doppelten Teilnehmeranzahl. Gegenüber den bisherigen Steuerungs- und/oder Regelungssystemen ergibt sich somit insgesamt eine beträchtliche Erhöhung des Datendurchsatzes. Grundsätzlich können die Datenpakete auf dem Ring von jedem Teilnehmer zu jedem beliebigen Zeitpunkt ausgesendet werden, z.B. am Ende des laufenden Transfers. Damit kann der bisher vorgesehene, stets als "bottleneck" wirkende Master entfallen. Auch ein Aktuator kann somit beispielsweise von sich aus eine Status/Alarm-Meldung auf den Ring absetzen, ohne daß er dazu auf eine vorherige Anfrage einer Steuereinheit warten muß.

Bei einer zweckmäßigen praktischen Ausführungsform sind die Aktuatoren zur Quer- und/oder Längsprofilregelung bestimmter Eigenschaften der Faserstoffbahn vorgesehen.

Außer den Aktuatoren kann insbesondere auch wenigstens eine Steuereinheit als intelligenter Teilnehmer des geschlossenen Pipelineringes bzw. des lokalen LAN-Netzes vorgesehen sein. Dabei sind die Aktuatoren und die Steuereinheit vorzugsweise gleichberechtigte Teilnehmer des geschlossenen Pipelineringes bzw. des lokalen LAN-Netzes.

Bei dem geschlossenen Pipelinering kann es sich um einen unidirektionalen oder auch um einen bidirektionalen Ring handeln.

In der Praxis ist jedes über den geschlossenen Pipelinering übertragene Datenpaket mit einer Kennung versehen, wobei ein jeweiliges Datenpaket spätestens von dem Teilnehmer, der es ausgesendet hat, wieder vom Ring genommen wird. Ein betreffendes Datenpaket durchläuft den Ring somit höchstens einmal.

Die Größe der über den geschlossenen Pipelinering übertragenen Datenpakete kann variabel und durch einen jeweiligen Teilnehmer des geschlossenen Pipelinerings veränderbar sein. Somit können die Datenpakete beim Durchlauf durch den Ring durch die Teilnehmer insbesondere verkleinert oder vergrößert werden. Dies ist beispielsweise beim Senden von Sollwerten oder beim Lesen von Istwerten durch eine Steuereinheit sinnvoll. Dabei kann jeder Teilnehmer die für ihn bestimmten Daten dem jeweiligen Datenpaket entnehmen, während er die von ihm kommenden Daten an das Datenpaket anhängt.

Die den intelligenten Teilnehmern des geschlossenen Pipelinerings zugeordneten Adressen sind zweckmäßigerweise durch deren jeweilige geometrische Position in dem Pipelinering bestimmt.

Die Adressenvergabe für die intelligenten Teilnehmer des geschlossenen Pipelinerings erfolgt vorzugsweise automatisch. Sie kann beispielsweise während oder nach einer jeweiligen Inbetriebnahme des geschlossenen Pipelinerings erfolgen.

Ferner ist die Verwendung einer sogenannten "Broadcast"-Adresse möglich, die für Datenpakete reserviert ist, die an alle Teilnehmer des geschlossenen Pipelineringes gerichtet sind. Derartige, nicht nur für einzelne, sondern für alle Teilnehmer bestimmte Datenpakete werden bei freiem Ring, d.h. dann, wenn kein weiteres Datenpaket ausgesendet wurde, unmittelbar nach einer Identifizierung des jeweiligen Datenpaket-Kopfes von einem betreffenden Teilnehmer an den nächsten Teilnehmer weitergegeben.

Von besonderem Vorteil ist, wenn nach dem Redundanzprinzip wenigstens zwei Steuereinheiten als intelligente Teilnehmer des geschlossenen Pipelineringes bzw. des lokalen LAN-Netzes vorgesehen sind. Damit kann problemlos insbesondere auch ein aktives Redundanzkonzept verwirklicht werden, bei dem z.B. die Aktionen zumindest einer aktiven Steuereinheit durch wenigstens eine redundante Steuereinheit überwacht werden. Im Fall einer fehlerhaften aktiven Steuereinheit kann die diese überwachende Steuereinheit beispielsweise eine entsprechende Fehlermeldung absetzen und/oder die fehlerhafte Steuereinheit automatisch abschalten und vorzugsweise ersetzen.

Nachdem jeder Teilnehmer nur mit den unmittelbar benachbarten Teilnehmern verbunden ist, läßt sich auf relativ einfache Weise eine auf Fiberoptik basierende Hardware-Struktur realisieren. So kann der geschlossene Pipelinering beispielsweise auf der Basis einer Fiberoptik aufgebaut sein. Grundsätzlich ist es auch möglich, den Ring zumindest teilweise über Koax, twisted pair und/oder dergleichen aufzubauen.

Bei einer in der Praxis bevorzugten Ausführungsform des erfindungsgemäßen Steuerungs- und/oder Regelungssystems sind die Aktuatoren mit eigenen Prozessoren versehen.

Vorzugsweise bildet der geschlossene Pipelinering bzw. das lokale LAN-Netz ein Multiprocessing-System. Dabei kann vorzugsweise jeder dem geschlossenen Pipelinering bzw. dem lokalen LAN-Netz zugeordnete Aktuator auf der Basis eines ihn betreffenden Teils eines Steuerungsund/oder Regelungsalgorithmus arbeiten. Hierbei kann beispielsweise wieder eine Quer- und/oder Längsprofilregelung bestimmter Eigenschaften der Faserstoffbahn vorgesehen sein.

Eine bevorzugte praktische Ausführungsform des erfindungsgemäßen Steuerungs- und/oder Regelungssystems zeichnet sich dadurch aus, daß die ohne Master gebildete dezentrale Kommunikations-/Hardware-Struktur eine Quer- und/oder Längsprofilregelung bestimmter Eigenschaften der Faserstoffbahn ausschließlich durch die parallel arbeitenden, mit eigenen Prozessoren versehenen Aktuatoren erfolgt, die über den geschlossenen Pipelinering bzw. das lokale LAN-Netz untereinander koordiniert sind.

Bei einer praktischen Ausführungsform ist jeder dem geschlossenen Pipelinering bzw. dem lokalen LAN-Netz zugeordnete Aktuator zumindest für solche Operationen wie insbesondere eine Positionsregelung, einen Selbsttest, eine Statusermittlung, die Kommunikation mit den anderen Teilnehmern des geschlossenen Pipelinerings bzw. des lokalen LAN-Netzes und/oder dergleichen ausgelegt. Wie bereits erwähnt, können die Aktuatoren zusätzlich oder alternativ jedoch auch für komplexere Operationen ausgelegt sein. So ist bei einer bevorzugten praktischen Ausführungsform vorgesehen, daß vorzugsweise jeder dem geschlossenen Pipelinering bzw. dem lokalen LAN-Netz zugeordnete Aktuator auf der Basis eines ihn betreffenden Teils eines Steuerungs- und/oder Regelungsalgorithmus arbeitet. Der hierbei erforderliche höhere Datendurchsatz ist durch den geschlossenen Pipelinering bzw. das lokale LAN-Netz gewährleistet. Demgegenüber wäre die Verwendung einer herkömmlichen Master/Slave-Busstruktur mit einem erheblichen Koordinations- und Kommunikationsaufwand verbunden, was die praktische Ausführung einer solchen Master/Slave-Busstruktur praktisch ausschließen würde.

Zweckmäßigerweise ist die den geschlossenen Pipelinering bzw. das lokale LAN-Netz aufweisende dezentrale Kommunikations-/Hardware-Struktur zumindest teilweise durch Standard-Hardwaremodule, durch ein Standard-Betriebssystem und/oder durch Standard-Kommunikationsspezifikationen gebildet bzw. definiert. So können eine Standard-Hardware beispielsweise auf der Basis der x86-Familie von Intel (z.B. 80386EX), ein Standard-Betriebssystem beispielsweise auf der Basis des QNX-Neutrino und Standard-Kommunikations-Spezifikationen beispielsweise auf der Basis von Ethernet mit twisted pair oder FDDI mit Fiberoptik vorgesehen sein.

In der Praxis kann für einen Austausch von Daten eines Meßrahmens und/oder von Bedienstationen eine Kommunikation mit einem Qualitätsüberwachungssystem (Quality Control System) erforderlich sein. Diese Kommunikation kann über weitere Prozessoren erfolgen, die vorzugsweise jedoch keinerlei Master-Funktion übernehmen, sondern ausschließlich dem Datenaustausch dienen.

Das Steuerungs- und/oder Regelungssystem kann zweckmäßigerweise so ausgelegt sein, daß parallele Meßwerte von ortsfesten, parallel arbeitenden Sensoren dezentral verarbeitet werden können.

Das lokale LAN-Netz basiert vorzugsweise auf Ethernet.

Der Pipelinering kann also insbesondere auch alternativ durch ein vorzugsweise auf Ethernet basierendes sogenanntes lokales oder örtliches LAN-Netz (LAN = local area network) ersetzt werden. Dabei sieht jeder empfangende Teilnehmer zu jedem Zeitpunkt den sendenden Teilnehmer, wobei nur ein Teilnehmer zu einem Zeitpunkt möglich ist, bei dem es sich allerdings um einen beliebigen Teilnehmer handeln kann. Jeder Teilnehmer filtert die für ihn bestimmten Datenpakete heraus und beantwortet sie eventuell an den Sender. Dieses Konzept hat u.a. zur Folge, daß keine automatische Adreßvergabe mehr möglich ist. Diese muß nun manuell beim Konfigurieren des Systems geschehen. Es ist nach wie vor kein Master erforderlich, d.h. das System besitzt einen "Peer-To-Peer"-Aufbau, bei dem alle Teilnehmer gleichberechtigt sind. Das zuvor angegebene Redundanzkonzept kann beibehalten werden. Demzufolge kann bei Ausfall einer Steuereinheit deren Funktion automatisch durch eine weitere Steuereinheit übernommen werden. Die physikalische Verbindung der einzelnen Teilnehmer sowie deren Funktionen können grundsätzlich so wie in Verbindung mit dem Pipelinering sein. Das Konzept ist ebenso wie die Pipelinestruktur nicht mehr ein klassisches Bus-System mit einem Master und vielen Slaves, sondern ein Netzwerk-System mit lauter gleichberechtigten Teilnehmern.

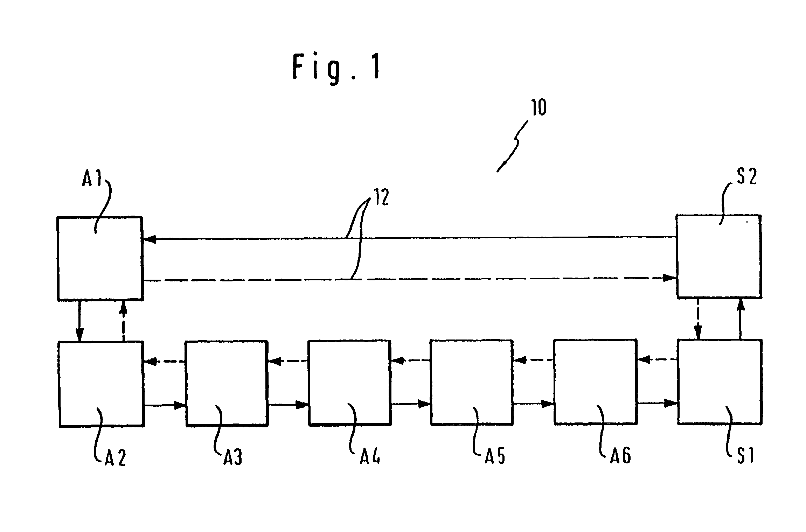

Die Erfindung wird im folgenden anhand von Ausführungsbeispielen unter Bezugnahme auf die Zeichnung näher erläutert; in dieser zeigen
- Figur 1: die dezentrale Kommunikations-/Hardware-Struktur eines ersten Ausführungsbeispiels des erfindungsgemäßen Steuerungs- und/oder Regelungssystems,
- Figur 2: die dezentrale Kommunikations-/Hardware-Struktur eines weiteres Ausführungsbeispiel des erfindungsgemäßen Steuerungs- und/oder Regelungssystems und
- Figur 3: die dezentrale Kommunikations-/Hardware-Struktur eines weiteres Ausführungsbeispiel.

Die in der Figur dargestellte dezentrale Kommunikations-/Hardware-Struktur 10 ist Teil eines Steuerungs- und/oder Regelungssystems einer Maschine zur Herstellung einer Faserstoffbahn wie insbesondere einer Papier- und/oder Kartonbahn mit mehreren jeweils wenigstens einem Stellglied zugeordneten Aktuatoren zur Beeinflussung bestimmter Eigenschaften der herzustellenden Faserstoffbahn.

Dabei bilden mehrere Aktuatoren A1 bis A6 sowie zwei Steuereinheiten S1 und S2 intelligente Teilnehmer der dezentralen Kommunikation-/Hardware-Struktur 10, in der sie über einen geschlossenen Pipelinering 12 miteinander gekoppelt sind. Die beiden Steuereinheiten S 1 und S2 können jeweils einen PC umfassen.

In diesem geschlossenen Pipelinering 12 ist jeder Teilnehmer nur mit dem ihm unmittelbar benachbarten Teilnehmern verbunden. Bei dem geschlossenen Pipelinering 12 kann es sich um einen unidirektionalen oder um einen bidirektionalen Ring handeln, wie dies durch den gestrichelt dargestellten zusätzlichen Pfad angedeutet ist.

Die Aktuatoren A1 - A6 und die Steuereinheiten S1, S2 sind vorzugsweise gleichberechtigte Teilnehmer des geschlossenen Pipelineringes 12. Die dezentrale Kommunikations-/Hardware-Struktur 10 ist insbesondere ohne irgendeinen Master gebildet.

Jedes über den geschlossenen Pipelinering 12 übertragene Datenpaket ist mit einer Kennung versehen. Es wird spätestens von dem Teilnehmer, der es ausgesendet hat, wieder vom Ring genommen. Zudem kann die Größe der über den geschlossenen Pipelinering 12 übertragenen Datenpakete variabel und durch einen jeweiligen Teilnehmer des geschlossenen Pipelineringes 12 veränderbar sein.

Im vorliegenden Fall sind die den intelligenten Teilnehmern des geschlossenen Pipelineringes 12 zugeordneten Adressen durch deren jeweilige geometrische Position in dem Pipelinering 12 bestimmt. Die Adressenvergabe für die intelligenten Teilnehmer erfolgt automatisch beispielsweise während oder nach einer jeweiligen Inbetriebnahme des geschlossenen Pipelineringes 12.

Die beiden Steuereinheiten S1, S2 können nach dem Redundanzprinzip vorgesehen und so ausgelegt sein, daß die eine Steuereinheit die Aktionen der anderen überwacht. Ist die überwachte Steuereinheit fehlerhaft, so kann die andere Steuereinheit beispielsweise eine entsprechende Fehlermeldung absetzen und/oder die fehlerhafte Steuereinheit automatisch abschalten und vorzugsweise ersetzen.

Im vorliegenden Fall ist der geschlossene Pipelinering 12 auf der Basis einer Fiberoptik aufgebaut.

Die Aktuatoren A1 bis A6 sind ebenso wie die Steuereinheiten S1, S2 mit eigenen Prozessoren versehen, so daß der geschlossene Pipelinering 12 ein Multiprocessing-System bildet. Die Aktuatoren A1 bis A6 können somit nicht nur einfachere Operationen wie beispielsweise eine jeweilige Positionsregelung, einen Selbsttest, eine Statusermittlung, die Kommunikation mit den anderen Teilnehmern des geschlossenen Pipelinerings 12 und/oder dergleichen ausführen, sondern jeweils insbesondere auch auf der Basis eines den jeweiligen Aktuator betreffenden Teils eines Steuerungs- und/ oder Regelungsalgorithmus arbeiten.

Diese ohne Master ausgebildete dezentrale Kommunikations-/Hardware-Struktur 10 kann beispielsweise zur Quer- und/oder Längsprofilregelung bestimmter Eigenschaften der Faserstoffbahn vorgesehen sein, wobei diese Quer- bzw. Längsprofilregelung vorzugsweise ausschließlich durch die parallel arbeitenden, mit eigenen Prozessoren versehenen Aktuatoren A1 - A6 erfolgt, die über den geschlossenen Pipelinering 12 untereinander koordiniert sind.

Im vorliegenden Fall ist die den geschlossenen Pipelinering 12 aufweisende dezentrale Kommunikations-/Hardware-Struktur 10 zumindest teilweise durch Standard-Hardwaremodule, durch ein Standard-Betriebssystem und/oder durch Standard-Kommunikationsspezifikationen gebildet bzw. definiert.

Über die Aktuatoren A1 bis A6 und die betreffenden Stellglieder werden beispielsweise während einer jeweiligen Quer- und/oder Längsprofilregelung die Flächemasse, die Feuchte, die Dicke, die Glätte und/oder der Glanz der herzustellenden Faserstoffbahn und/oder dergleichen beeinflußt.

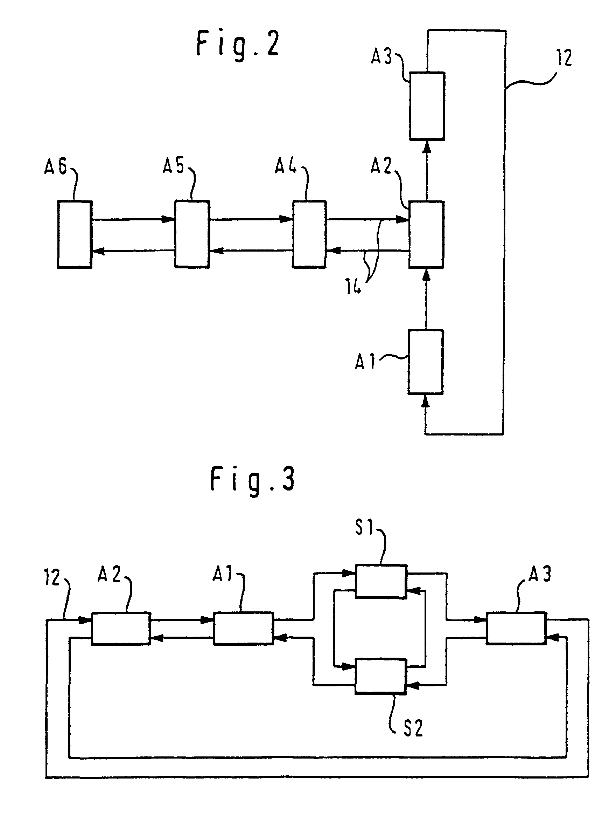

Bei dem in der Figur 2 gezeigten Ausführungsbeispiel ist die Ringstruktur mit einer Sternstruktur kombiniert. Hierbei kann insbesondere der beispielsweise durch einen Aktuator gebildete Teilnehmer A2 nicht nur mit den beiden benachbarten Teilnehmern A1 und A3 des geschlossenen Pipelineringes 12, sondern zusätzlich auch mit einem benachbarten Teilnehmer A4 einer Stichleitung 14 Kontakt halten. In der Figur 2 sind zwei weitere Teilnehmer A5 und A6 dieser Stichleitung 14 angedeutet. Auch in der Stichleitung 14 ist eine Ring-Kommunikation möglich. Bei den Teilnehmern A1 bis A6 des geschlossenen Pipelineringes 12 bzw. der Stichleitung 14 kann es sich beispielsweise um Aktuatoren handeln. Grundsätzlich kann jedoch auch wieder wenigstens eine Steuereinheit vorgesehen sein. Grundsätzlich kann innerhalb der kombinierten Ring/Stern-Struktur jeder Teilnehmer mit jedem anderen Teilnehmer kommunizieren.

Figur 3 zeigt eine Redundanzstruktur, in der sich zwei parallel zueinander angeordnete Steuereinheiten S1 und S2 gegenseitig überwachen. Beim dargestellten Ausführungsbeispiel sind diese Steuereinheiten S1 und S2 ebenso wie die noch dargestellten Aktuatoren A1 und A1 wieder Teilnehmer eines geschlossenen Pipelineringes 12, der im vorliegenden Fall bidirektional ist.

Bei sämtlichen zuvor beschriebenen Ausführungsbeispielen kann der Pipelinering insbesondere auch durch ein vorzugsweise auf Ethernet basierendes sogenanntes lokales oder örtliches LAN-Netz (LAN = local area network) ersetzt werden. Dabei sieht jeder empfangende Teilnehmer zu jedem Zeitpunkt den sendenden Teilnehmer, wobei nur ein Teilnehmer zu einem Zeitpunkt möglich ist, bei dem es sich allerdings um einen beliebigen Teilnehmer handeln kann. Jeder Teilnehmer filtert die für ihn bestimmten Datenpakete heraus und beantwortet sie eventuell an den Sender. Dieses Konzept hat u.a. zur Folge, daß keine automatische Adreßvergabe mehr möglich ist. Diese muß nun manuell beim Konfigurieren des Systems geschehen. Es ist nach wie vor kein Master erforderlich, d.h. das System besitzt einen "Peer-To-Peer"-Aufbau, bei dem alle Teilnehmer gleichberechtigt sind. Das zuvor angegebene Redundanzkonzept kann beibehalten werden. Demzufolge kann bei Ausfall einer Steuereinheit deren Funktion automatisch durch eine weitere Steuereinheit übernommen werden. Die physikalische Verbindung der einzelnen Teilnehmer sowie deren Funktionen können grundsätzlich so wie in Verbindung mit dem Pipelinering sein. Das Konzept ist ebenso wie die Pipelinestruktur nicht mehr ein klassisches Bus-System mit einem Master und vielen Slaves, sondern ein Netzwerk-System mit lauter gleichberechtigten Teilnehmern.

## Patentansprüche

1. Steuerungs- und/oder Regelungssystem einer Maschine zur Herstellung einer Faserstoffbahn wie insbesondere einer Papier- und/oder Kartonbahn, mit mehreren jeweils wenigstens einem Stellglied zugeordneten intelligenten Aktuatoren (A1 - A6) zur Beeinflussung bestimmter Eigenschaften der herzustellenden Faserstoffbahn,
**dadurch gekennzeichnet,**
**dass** die Aktuatoren (A1 - A6) intelligente, mit eigenen Prozessoren versehene Teilnehmer einer dezentralen Kommunikations-/ Hardware-Struktur (10) ohne Master bilden, in der sie über einen geschlossenen Pipelinering (12) miteinander gekoppelt sind, in dem jeder Teilnehmer stets nur mit den jeweils unmittelbar benachbarten Teilnehmern verbunden ist und die Datenpakete von jedem Teilnehmer zu jedem beliebigen Zeitpunkt ausgesendet werden können, und/oder über ein lokales LAN-Netz miteinander gekoppelt sind,
das einen Peer-To-Peer-Aufbau besitzt, bei dem alle Teilnehmer gleichberechtigt sind.

2. Steuerungs- und/oder Regelungssystem nach Anspruch 1,
**dadurch gekennzeichnet,**
**dass** die Aktuatoren (A1 - A6) zur Quer- und/oder Längsprofilregelung bestimmter Eigenschaften der Faserstoffbahn vorgesehen sind.

3. Steuerungs- und/oder Regelungssystem nach Anspruch 1 oder 2,
**dadurch gekennzeichnet,**
**dass** außer den Aktuatoren (A1 - A6) auch wenigstens eine Steuereinheit (S1, S2) als intelligenter Teilnehmer des geschlossenen Pipelineringes (12) bzw. des lokalen LAN-Netzes vorgesehen ist.

4. Steuerungs- und/oder Regelungssystem nach Anspruch 3,
**dadurch gekennzeichnet,**
**dass** die Aktuatoren (A1 - A6) und die Steuereinheit (S1, S2) gleichberechtigte Teilnehmer des geschlossenen Pipelineringes (12) bzw. des lokalen LAN-Netzes sind.

5. Steuerungs- und/oder Regelungssystem nach einem der vorhergehenden Ansprüche,
**dadurch gekennzeichnet,**
**dass** der geschlossene Pipelinering (12) ein unidirektionaler Ring ist.

6. Steuerungs- und/oder Regelungssystem nach einem der Ansprüche 1 bis 4,
**dadurch gekennzeichnet,**
**dass** der geschlossene Pipelinering (12) ein bidirektionaler Ring ist.

7. Steuerungs- und/oder Regelungssystem nach einem der vorhergehenden Ansprüche,
**dadurch gekennzeichnet,**
**dass** jedes über den geschlossenen Pipelinering (12) übertragene Datenpaket mit einer Kennung versehen ist und spätestens von dem Teilnehmer, der es ausgesendet hat, wieder vom Ring genommen wird.

8. Steuerungs- und/oder Regelungssystem nach einem der vorhergehenden Ansprüche,
**dadurch gekennzeichnet,**
**dass** die Größe der über den geschlossenen Pipelinering (12) übertragenen Datenpakete variabel und vorzugsweise durch wenigstens einen Teilnehmer des geschlossenen Pipelineringes (12) veränderbar ist.

9. Steuerungs- und/oder Regelungssystem nach einem der vorhergehenden Ansprüche,
**dadurch gekennzeichnet,**
**dass** die den intelligenten Teilnehmern des geschlossenen Pipelineringes (12) zugeordneten Adressen durch deren jeweilige geometrische Position in dem Pipelinering (12) bestimmt sind.

10. Steuerungs- und/oder Regelungssystem nach einem der vorhergehenden Ansprüche,
**dadurch gekennzeichnet,**
**dass** die Adressenvergabe für die intelligenten Teilnehmer des geschlossenen Pipelineringes (12) automatisch erfolgt.

11. Steuerungs- und/oder Regelungssystem nach Anspruch 10, dadurch **gekennzeiehnet**,
dass die Adressenvergabe während oder nach einer jeweiligen Inbetriebnahme des geschlossenen Pipelineringes (12) erfolgt.

12. Steuerungs- und/oder Regelungssystem nach einem der vorhergehenden Ansprüche,
**dadurch gekennzeichnet,**
**dass** nach dem Redundanzprinzip wenigstens zwei Steuereinheiten (S1, S2) als intelligente Teilnehmer des geschlossenen Pipelineringes (12) bzw. des lokalen LAN-Netzes vorgesehen sind.

13. Steuerungs- und/oder Regelungssystem nach Anspruch 12,
**dadurch gekennzeichnet,**
**dass** durch wenigstens eine redundante Steuereinheit (S1, S2) die Aktionen zumindest einer aktiven Steuereinheit (S2, S1) überwacht werden.

14. Steuerungs- und/oder Regelungssystem nach Anspruch 13,
**dadurch gekennzeichnet,**
**dass** im Fall einer fehlerhaften aktiven Steuereinheit (S2, S1) die diese überwachende Steuereinheit (S1, S2) eine entsprechende Fehlermeldung absetzt und/oder die fehlerhafte Steuereinheit (S2, S1) automatisch abschaltet und vorzugsweise ersetzt.

15. Steuerungs- und/oder Regelungssystem nach einem der vorhergehenden Ansprüche,
**dadurch gekennzeichnet,**
**dass** der geschlossene Pipelinering (12) auf der Basis einer Fiberoptik und/oder über Koax, twisted pair und/oder dergleichen aufgebaut ist.

16. Steuerungs- und/oder Regelungssystem nach einem der vorhergehenden Ansprüche,
**dadurch gekennzeichnet,**
**dass** der geschlossene Pipelinering (12) bzw. das lokale LAN-Netz ein Multiprocessing-System bildet.

17. Steuerungs- und/oder Regelungssystem nach Anspruch 16,
**dadurch gekennzeichnet,**
**dass** vorzugsweise jeder dem geschlossenen Pipelinering (12) bzw. dem lokalen LAN-Netz zugeordnete Aktuator (A1 - A6) auf der Basis eines ihn betreffenden Teils eines Steuerungs- und/oder Regelungsalgorithmus arbeitet.

18. Steuerungs- und/oder Regelungssystem nach einem der vorhergehenden Ansprüche,
**dadurch gekennzeichnet,**
**dass** die ohne Master gebildete dezentrale Kommunikations-/ Hardware-Struktur (10) und eine Quer- und/oder Längsprofilregelung bestimmter Eigenschaften der Faserstoffbahn ausschließlich durch die parallel arbeitenden, mit eigenen Prozessoren versehenen Aktuatoren (A1 - A6) erfolgt, die über den geschlossenen Pipelinering (12) bzw. das lokale LAN-Netz untereinander koordiniert sind.

19. Steuerungs- und/oder Regelungssystem nach einem der vorhergehenden Ansprüche,
**dadurch gekennzeichnet,**
**dass** jeder dem geschlossenen Pipelinering (12) bzw. dem lokalen LAN-Netz zugeordnete Aktuator (A1 - A6) zumindest für solche Operationen wie insbesondere eine Positionsregelung, einen Selbsttest, eine Statusermittlung, die Kommunikation mit den anderen Teilnehmern des geschlossenen Pipelineringes (12) bzw. des lokalen LAN-Netzes ausgelegt ist.

20. Steuerungs- und/oder Regelungssystem nach einem der vorhergehenden Ansprüche,
**dadurch gekennzeichnet,**
**dass** die den geschlossenen Pipelinering (12) bzw. das lokale LAN-Netz aufweisende dezentrale Kommunikations-/Hardware-Struktur (10) zumindest teilweise durch Standard-Hardwaremodule, durch ein Standard-Betriebssystem und/oder durch Standard-Kommunikationsspezifikationen gebildet bzw. definiert ist.

21. Steuerungs- und/oder Regelungssystem nach einem der vorhergehenden Ansprüche,
**dadurch gekennzeichnet,**
**dass** über die Aktuatoren und die betreffenden Stellglieder die Flächenmasse, die Feuchte, die Dicke, die Glätte und/oder der Glanz der herzustellenden Faserstoffbahn und/oder dergleichen beeinflussbar sind.

22. Steuerungs- und/oder Regelungssystem nach einem der vorhergehenden Ansprüche,
**dadurch gekennzeichnet,**
**dass** es so ausgelegt ist, dass parallele Messwerte von ortsfesten, parallel arbeitenden Sensoren dezentral verarbeitet werden können.

## Claims

1. Control and/or regulating system for a machine used for producing a fibre web, such as in particular a paper and/or board web, having a plurality of intelligent actuators (A1 - A6), in each case associated with at least one actuating element, for influencing specific properties of the fibre web to be produced,
**characterized in that**
the actuators (A1 - A6) form intelligent participants provided with their own processors in a decentralized communication/hardware structure (10) without a master, in which they are coupled to one another via a closed pipeline ring (12), in which each participant is always connected only to the respectively immediately adjacent participants and the data packets can be sent out by each participant at any arbitrary time, and/or are coupled to one another via a local LAN network, which has a peer-to-peer structure in which all the participants have equal rights.

2. Control and/or regulating system according to Claim 1, **characterized in that** the actuators (A1 - A6) are provided for the regulation of the cross-machine and/or machine direction profile of specific properties of the fibre web.

3. Control and/or regulating system according to Claim 1 or 2, **characterized in that**, apart from the actuators (A1 - A6), at least one control unit (S1, S2) is also provided as an intelligent participant in the closed pipeline ring (12) or the local LAN network.

4. Control and/or regulating system according to Claim 3, **characterized in that** the actuators (A1 - A6) and the control unit (S1, S2) are equal-rights participants in the closed pipeline ring (12) or the local LAN network.

5. Control and/or regulating system according to one of the preceding claims, **characterized in that** the closed pipeline ring (12) is a unidirectional ring.

6. Control and/or regulating system according to one of Claims 1 to 4, **characterized in that** the closed pipeline ring (12) is a bidirectional ring.

7. Control and/or regulating system according to one of the preceding claims, **characterized in that** each data packet transmitted via the closed pipeline ring (12) is provided with a code and is taken from the ring again at the latest by the participant which has sent it out.

8. Control and/or regulating system according to one of the preceding claims, **characterized in that** the size of the data packets transmitted via the closed pipeline ring (12) is variable and preferably can be varied by at least one participant in the closed pipeline ring (12).

9. Control and/or regulating system according to one of the preceding claims, **characterized in that** the addresses assigned to the intelligent participants in the closed pipeline ring (12) are determined by their respective geometric position in the pipeline ring (12).

10. Control and/or regulating system according to one of the preceding claims, **characterized in that** the address allocation for the intelligent participants in the closed pipeline ring (12) is carried out automatically.

11. Control and/or regulating system according to Claim 10, **characterized in that** the address allocation is carried out during or after a respective start-up of the closed pipeline ring (12).

12. Control and/or regulating system according to one of the preceding claims, **characterized in that**, in accordance with the redundancy principle, at least two control units (S1, S2) are provided as intelligent participants in the closed pipeline ring (12) or the local LAN network.

13. Control and/or regulating system according to Claim 12, **characterized in that** the actions of at least one active control unit (S2, S1) are monitored by at least one redundant control unit (S1, S2).

14. Control and/or regulating system according to Claim 13, **characterized in that**, in the event of a faulty active control unit (S2, S1), the control unit (S1, S2) monitoring the latter outputs an appropriate error message and/or automatically switches off and preferably takes the place of the faulty control unit (S2, S1).

15. Control and/or regulating system according to one of the preceding claims, **characterized in that** the closed pipeline ring (12) is built up on the basis of fibre optics and/or via coax, twisted pair and/or the like.

16. Control and/or regulating system according to one of the preceding claims, **characterized in that** the closed pipeline ring (12) or the local LAN network forms a multiprocessing system.

17. Control and/or regulating system according to Claim 16, **characterized in that** preferably each actuator (A1 - A6) assigned to the closed pipeline ring (12) or the local LAN network operates on the basis of a part of a control and/or regulating algorithm relating to it.

18. Control and/or regulating system according to one of the preceding claims, **characterized in that** the decentralized communications/hardware structure (10) formed without a master, and cross-machine and/or machine direction profile regulation of specific properties of the fibre web, are carried out exclusively by the actuators (A1 - A6), which operate in parallel, are provided with their own processors and are coordinated with one another via the closed pipeline ring (12) or the local LAN network.

19. Control and/or regulating system according to one of the preceding claims, **characterized in that** each actuator (A1 - A6) associated with the closed pipeline ring (12) or the local LAN network is designed at least for such operations as, in particular, position regulation, a self-test, a status determination and communication with the other participants in the closed pipeline ring (12) or the local LAN network.

20. Control and/or regulating system according to one of the preceding claims, **characterized in that** the decentralized communications/hardware structure (10) having the closed pipeline ring (12) or the local LAN network is formed or defined, at least
partly, by standard hardware modules, by a standard operating system and/or by standard communications specifications.

21. Control and/or regulating system according to one of the preceding claims, **characterized in that**, by means of the actuators and the relevant actuating elements, the grammage, the moisture, the thickness, the smoothness and/or the gloss of the fibre web and/or the like to be produced can be influenced.

22. Control and/or regulating system according to one of the preceding claims, **characterized in that** it is designed such that parallel measured values can be processed decentrally by locally fixed sensors operating in parallel.

## Revendications

1. Système de commande et/ou de régulation d'une machine destinée à fabriquer une bande de matière fibreuse comme, par exemple, une bande de papier et/ou de carton, comprenant plusieurs actionneurs intelligents (A1 - A6) à chaque fois associés à au moins un élément de réglage pour influencer certaines propriétés de la bande de matière fibreuse à fabriquer, **caractérisé en ce que** les actionneurs (A1 - A6) forment des périphériques intelligents munis de leurs propres processeurs d'une structure de communication / matérielle décentralisée (10) sans maître dans laquelle ils sont connectés entre eux par le biais d'un anneau en pipe-line fermé (12) au sein duquel chaque périphérique est toujours connecté seulement avec les périphériques directement voisins et les paquets de données peuvent être envoyés par chaque périphérique à un moment quelconque et/ou sont connectés entre eux par le biais d'un réseau local qui possède une structure Peer-To-Peer avec laquelle tous les périphériques possèdent les mêmes droits.

2. Système de commande et/ou de régulation selon la revendication 1, **caractérisé en ce que** les actionneurs (A1 - A6) sont prévus pour la régulation du profilé transversal et/ou longitudinal de certaines propriétés de la bande de matière fibreuse.

3. Système de commande et/ou de régulation selon la revendication 1 ou 2, **caractérisé en ce qu'**en plus des actionneurs (A1 - A6) est également prévue au moins une unité de commande (S1, S2) faisant office de périphérique intelligent de l'anneau en pipe-line fermé (12) ou du réseau local.

4. Système de commande et/ou de régulation selon la revendication 3, **caractérisé en ce que** les actionneurs (A1 - A6) et l'unité de commande (S1, S2) sont des périphériques de l'anneau en pipe-line fermé (12) ou du réseau local ayant les mêmes droits.

5. Système de commande et/ou de régulation selon l'une des revendications précédentes, **caractérisé en ce que** l'anneau en pipe-line fermé (12) est un anneau unidirectionnel.

6. Système de commande et/ou de régulation selon l'une des revendications 1 à 4, **caractérisé en ce que** l'anneau en pipe-line fermé (12) est un anneau bidirectionnel.

7. Système de commande et/ou de régulation selon l'une des revendications précédentes, **caractérisé en ce que** chaque paquet de données transmis par le biais de l'anneau en pipe-line fermé (12) est muni d'un identifiant et est retiré de l'anneau au plus tard par le périphérique qui l'a envoyé.

8. Système de commande et/ou de régulation selon l'une des revendications précédentes, **caractérisé en ce que** la grandeur des paquets de données transmis par le biais de l'anneau en pipe-line fermé (12) est variable et peut de préférence être modifiée par au moins un périphérique de l'anneau en pipe-line fermé (12).

9. Système de commande et/ou de régulation selon l'une des revendications précédentes, **caractérisé en ce que** les adresses associées aux périphériques intelligents de l'anneau en pipe-line fermé (12) sont déterminées par leurs positions géométriques respectives dans l'anneau en pipe-line (12).

10. Système de commande et/ou de régulation selon l'une des revendications précédentes, **caractérisé en ce que** l'attribution des adresses aux périphériques intelligents de l'anneau en pipe-line fermé (12) s'effectue automatiquement.

11. Système de commande et/ou de régulation selon la revendication 10, **caractérisé en ce que** l'attribution des adresses s'effectue pendant ou après une mise en service correspondante de l'anneau en pipeline fermé (12).

12. Système de commande et/ou de régulation selon l'une des revendications précédentes, **caractérisé en ce que** selon le principe de redondance, au moins deux unités de commande (S1, S2) sont prévues comme périphériques intelligents de l'anneau en pipe-line fermé (12) ou du réseau local.

13. Système de commande et/ou de régulation selon la revendication 12, **caractérisé en ce que** les actions d'au moins une unité de commande active (S2, S1) sont surveillées par au moins une unité de commande redondante (S1, S2).

14. Système de commande et/ou de régulation selon la revendication 13, **caractérisé en ce que** dans le cas de la défaillance d'une unité de commande active (S2, S1), l'unité de commande (S1, S2) qui la surveille émet un message d'erreur correspondant et/ou éteint automatiquement l'unité de commande (S2, S1) défaillante et de préférence la remplace.

15. Système de commande et/ou de régulation selon l'une des revendications précédentes, **caractérisé en ce que** l'anneau en pipe-line fermé (12) est construit sur la base d'une fibre optique et/ou d'un câble coaxial, à paire torsadée et/ou similaire.

16. Système de commande et/ou de régulation selon l'une des revendications précédentes, **caractérisé en ce que** l'anneau en pipe-line fermé (12) ou le réseau local constitue un système multiprocesseur.

17. Système de commande et/ou de régulation selon la revendication 16, **caractérisé en ce que** de préférence chaque actionneur (A1 - A6) associé à l'anneau en pipe-line fermé (12) ou au réseau local fonctionne sur la base d'une partie qui le concerne d'un algorithme de commande et/ou de régulation.

18. Système de commande et/ou de régulation selon l'une des revendications précédentes, **caractérisé en ce que** la structure de communication / matérielle décentralisée (10) fonctionnant sans maître et une régulation du profilé transversal et/ou longitudinal de certaines propriétés de la bande de matière fibreuse s'effectuent exclusivement par les actionneurs (A1 - A6) fonctionnant en parallèle et munis de leurs propres processeurs, lesquels sont cordonnés entre eux par le biais de l'anneau en pipe-line fermé (12) ou du réseau local.

19. Système de commande et/ou de régulation selon l'une des revendications précédentes, **caractérisé en ce que** chaque actionneur (A1 - A6) associé à l'anneau en pipe-line fermé (12) ou au réseau local est au moins conçu pour effectuer des opérations comme notamment une régulation de la position, un auto-test, une détermination de l'état, la communication avec les autres périphériques de l'anneau en pipe-line fermé (12) ou du réseau local.

20. Système de commande et/ou de régulation selon l'une des revendications précédentes, **caractérisé en ce que** la structure de communication / matérielle décentralisée (10) qui présente l'anneau en pipe-line fermé (12) ou le réseau local est formée ou définie au moins partiellement par des modules matériels standard, par un système d'exploitation standard et/ou par des caractéristiques de communication standard.

21. Système de commande et/ou de régulation selon l'une des revendications précédentes, **caractérisé en ce que** le grammage, l'humidité, la densité, la rugosité et/ou la brillance de la bande de matière fibreuse et/ou similaire à fabriquer peuvent être influencés par le biais des actionneurs et des éléments de réglage concernés.

22. Système de commande et/ou de régulation selon l'une des revendications précédentes, **caractérisé en ce qu'**il est conçu de telle sorte que les valeurs mesurées en parallèle des capteurs fixes fonctionnant en parallèle peuvent être traitées de manière décentralisée.
